# EUROPEAN PATENT SPECIFICATION

(11) **EP 4 608 766 B1**
(45) Date of publication and mention of the grant of the patent: **30.09.2026**
(21) Application number: 23801300.7
(22) Date of filing: 18.10.2023
(51) Int. Cl.: C01B 3/047, F02C 3/24, F23D 14/00, F23J 7/00

(54) **METHOD AND APPARATUS FOR PROVIDING HEAT**
VERFAHREN UND VORRICHTUNG ZUR BEREITSTELLUNG VON WÄRME
PROCÉDÉ ET APPAREIL POUR FOURNIR DE LA CHALEUR

(30) Priority: 24.10.2022 EP 22020507
(43) Date of publication of application: 03.09.2025
(73) Proprietor: Linde GmbH, 82049 Pullach (DE)
(72) Inventor: GRAVILLE, Stephen Rhys, 82049 Pullach (DE); HIBBITT, Ian, 82049 Pullach (DE)
(74) Representative: Fischer, Werner
(86) International application number: PCT/EP2023/025438
(87) International publication number: WO 2024/088557

(56) References cited:
- CN-A- 113 896 168
- JP-B2- 7 079 068
- US-A1- 2001 018 035
- US-B2- 10 753 276

## Description

The present invention relates to a method and an apparatus for providing heat using ammonia as a fuel gas.

### Background

Ammonia may be an attractive fuel, hydrogen carrier and "storage form" for hydrogen less difficult to handle than compressed or liquefied hydrogen gas. Ammonia is also much more energy efficient to produce than liquid and compressed hydrogen. This is important when looking at the cradle to grave energy efficiency. As summarized in an article by Alexander H. Tullo, "Is ammonia the fuel of the future?," Chemical and Engineering News 2021, Volume 99, Issue 8, ammonia has a higher energy density, at 12.7 MJ/L, than even liquid hydrogen, at 8.5 MJ/L. Liquid hydrogen has to be stored at cryogenic conditions of -253 °C, whereas ammonia can be stored at a much less energy-intensive -33 °C. Furthermore, ammonia, though hazardous to handle, is much less flammable than hydrogen. Due to the wide use of ammonia in agriculture and as a chemical feedstock, an ammonia infrastructure already exists. Worldwide, about 180 million tonnes of ammonia is produced annually, and 20 million tonnes of ammonia is traded in the merchant market, via 120 ports worldwide are already equipped with ammonia terminals.

Ammonia may be used for co-firing or direct use in thermal power plants or gas turbines under development, for example, in order to provide additional energy, but also to provide better control of nitrous oxides formation via Selective Catalytic Reduction (SCR) or Selective Non-Catalytic Reduction (SNCR). For example, JP 2020-112280 A discloses a furnace comprising a plurality of burners which are adapted to use pulverized coal as a fuel, the coal being introduced into the burners by being entrained by combustion air in a combustion air tube. For co-firing ammonia, an inner tube in the combustion air tube is provided. A similar arrangement is disclosed in JP 2018-096680 A.

Ammonia co-firing for heating boilers is also subject of further patent applications such as WO 2019/189297 A1. Co-Firing of ammonia and pulverized coal is particularly advantageous as the combustion speeds are essentially the same. This means that retrofitting existing systems for co-firing with ammonia may essentially consist in exchanging the burners and power generation in such systems may be maintained by coal even if clean ammonia supply is not yet developed.

Gas turbines may also be operated by co-firing ammonia or using ammonia as the only fuel gas. For example, reference is made to US 2020/018482 A1, US 10,753,276 B2, US 11,231,176 B2 being only examples of a vast variety of configurations. Ammonia may be used as a "carrier" of voluminous hydrogen, as mentioned.

Besides combustion, ammonia may be catalytically "cracked" or "reformed" to form hydrogen in an ammonia cracker or reformer. The clean hydrogen thus formed may be used directly for many applications, including, but not limited to refineries, chemical production, steel production via the Direct Reduced Iron (DRI) process and hydrogen mobility applications, or to operate a gas turbine, waste heat of which can be used in the ammonia cracker. That is, "hydrogen", "ammonia" and "ammonia cracking" gas turbines may be used.

The advantage of using ammonia in devices as mentioned, and others, include that ammonia is a carbon-free fuel suitable for cracking to hydrogen and decarbonizing refining, chemicals, steel, mobility and heat and power generation.

The present invention has the object of improving the use of ammonia as a fuel in applications including, but not limited to, the applications discussed before.

### Summary

In view of the above, the present invention provides a method of providing heat using ammonia as a fuel and corresponding apparatus comprising the features of the independent claims. Preferred embodiments are the subject of the dependent claims and of the description that follows.

An important aspect in connection with the present invention is to use ammonia as an advantageous "carrier" for carbon free hydrogen. Heat may be transferred to, or transported by, steam or other heat transfer or storage media according to embodiments of the present invention steam therefore being a "heat transfer medium" usable in embodiments of the present invention. Therefore, if reference is made to steam generation or (over)heating, etc., hereinbelow, this is not intended to limit the scope of the present invention to steam generation or treatment.

The present invention is, inter alia, based on the surprising finding that a furnace arrangement partially resembling a furnace arrangement used in the so-called double combustion technology for Claus desulphurization methods is particularly useful for combusting ammonia, particularly using oxygen-enriched combustion. A surprising finding in the context of the present invention is, furthermore, that a substoichiometric oxygen amount may, in such a configuration, limit the formation of nitrous oxides.

For methods and apparatus used in Claus desulphurization methods, reference may be made to expert literature and documents such as EP 3 476 798 A1 by the present applicant, where particular reference may be made to paragraphs [0012].

The double combustion technology for Claus desulphurization methods is described elsewhere and is therefore only briefly summarized below. For further details, reference may be made to conference papers such as R. Schendel et al., "A new simple approach to capacity increase of refinery sulphur plants," Annual Meeting of the National Petroleum Refiners Association, 15 to 17 March 1998, and B. Hanson et al., "SURE™ Double Combustion Increases Capacity at the Tesoro Northwest Company Sulfur Plant (Anacortes, WA)," Brimstone Sulfur Conference, 14 to 17 September 1999. At low levels, oxygen can be simply mixed with combustion air in Claus processes. However, this method of introducing oxygen is normally limited to a maximum overall concentration of 28% oxygen. Therefore, burners may be specifically designed for introducing oxygen directly into the Claus reaction furnace. Even with a burner designed for higher concentrations of oxygen, however, the reaction furnace temperature would exceed the design limits of the refractory. Also, the capability of the existing waste heat boiler may limit oxygen usage, even before temperature limits are encountered. The double combustion process eliminates these problems, and allows operation at oxygen concentrations from 21% (100% air) up to 100% oxygen, while maintaining safe conservative temperatures.

To limit temperature rise, the combustion reactions are carried out in two stages with intermediate cooling, which are referred to as "first furnace zone," "second furnace zone" and "first heat transfer arrangement" hereinbelow. Acid gases are first subjected to a partial combustion at temperatures well below the safe operating temperature of the refractory, but at temperatures high enough to ensure complete ammonia and hydrocarbon destruction on the first furnace zone.

This first stage of combustion is carried out without meeting the overall stoichiometry requirements, or total oxygen demand. The gases are then cooled the first heat transfer arrangement, prior to entering the second furnace zone where the remainder of the required oxygen is introduced. No burner is provided in the second furnace zone. By design, the gases exiting the first heat transfer arrangement, and entering the second furnace zone, are substantially above the auto-ignition temperature under all normal, and turn down operating conditions. This allows for a low pressure drop system, which is easy to control, and easy to install.

Since the gases entering the second furnace zone are above the auto ignition temperature, even small quantities of oxygen will react completely. A burner is not required, and an oxygen lance may be used to introduce oxygen into the second furnace zone furnace. There is minimal pressure drop through the system because there is or are still only burners in the first furnace zone. Control of oxygen may be straightforward, as oxygen may simply be fed to the first and second reaction furnace zones at a constant ratio between the two furnace zones.

In this connection, the present invention provides a method for generating heat using a furnace arrangement with a first furnace zone, a first heat transfer arrangement arranged downstream of the first furnace zone, a second furnace zone arranged downstream of the first heat transfer arrangement, a second heat transfer arrangement arranged downstream of the second furnace zone, and a heat recovery arrangement arranged downstream of the second heat transfer arrangement.

One or more burners are used to combust a first part of an ammonia feed amount provided by one or more ammonia streams supplied to the one or more burners in the first furnace zone using oxygen of one or more first oxygen containing streams supplied to the one or more burners and generating a temperature suitable to thermally decompose ammonia, wherein a second part of the ammonia feed amount is thermally decomposed in the first furnace zone to form hydrogen and nitrogen, wherein one or more feed lances are used to provide oxygen to the second furnace zone using one or more second oxygen containing streams supplied to the one or more feed lances.

The term "oxygen containing stream" as used herein may refer to a stream of pure or essentially pure (e.g. "technical") oxygen or essentially consisting of oxygen, air or oxygen enriched air with an oxygen content higher that that of atmospheric air. At certain places hereinbelow, shorthand reference is made to an "oxygen stream" instead of an "oxygen containing stream" without any intent to limit the scope to pure or essentially pure oxygen.

For heat generation, such as envisaged in embodiments of the present invention, particularly air can be used rather than pure or essentially pure oxygen in the second furnace zone, and such an embodiment may be considered to be a more economic alternative. Oxygen or enriched air injection can minimize size of equipment and capital expenses, if necessary, depending on the balance between operating and capital expenses. If, as in embodiment of the present invention, a focus is placed on energy or steam production, air or enriched air may be a more appropriate oxidant for heat transfer of hot gases to second waste heat boiler.

According to the present invention, heat is transferred, using the first heat transfer arrangement and/or the second heat transfer arrangement, to a heat transfer medium, which particularly may be steam which can be used for any purpose generally known in the field of steam production, and the one or more first ammonia streams and/or the one or more first oxygen containing streams may be pre-heated using the heat recovery arrangement. The heat transfer medium may particularly be steam of a certain specification, e.g. a certain pressure and/or temperature, which may be brought, by the heat transfer, to a different specification, particularly a higher pressure and/or temperature and which may be used, thereafter, e.g. in a steam turbine or a heat consumer. A heat transfer medium may also be steam and/or water which is passed from a steam drum to the heat transfer arrangement and which may be passed back from the heat transfer arrangement to the steam drum. Any other heat transfer medium, such as a thermal oil, an ionic liquid, a molten salt, e.g., as customary in the field of heat transfer, may also be used, however.

Using a method according to the present invention, ammonia combustion for heat, power or steam generating purposes is becoming particularly advantageous as little or no carbon dioxide or nitrous oxide emissions are formed, providing that the ammonia is produced using hydrocarbons and the carbon dioxide emissions are captured and permanently stored via Carbon Capture and Storage or CCS (known as blue ammonia) or by production through (green) hydrogen produced from electrolysis of water using renewable power (known as green ammonia). The present invention is further particularly advantageous as well-tested and proven equipment, i.e., Claus furnaces, which may already be present at production facilities may be used in the context of the present invention.

In embodiments of the present invention, one or more first transfer line exchangers may be used as, or as a part of, the first heat transfer arrangement and one or more second transfer line exchangers may be used as, or as a part of, the second heat transfer arrangement, such transfer line exchangers (TLE) representing proven and well-tested equipment as well.

In alternative embodiments of the present invention, however, the first furnace zone, the second furnace zone, the first heat transfer arrangement, and the second heat transfer arrangement may be arranged in a shell comprising, along a common axis, a first terminal section, a central section and a second terminal section, wherein the first terminal section is axially subdivided to form a first terminal subsection and a second terminal subsection, wherein the central section is axially subdivided to form a first central subsection and a second central subsection, wherein the first terminal subsection is fluidly connected to the first central subsection, wherein the first central subsection is fluidly connected to the second central subsection via the second terminal section, wherein the first terminal subsection is used to provide the first furnace zone, wherein the first central subsection is used to provide the first heat transfer arrangement, wherein the second terminal section is used to provide the second furnace zone, and the second central subsection is used to provide the second heat transfer arrangement.

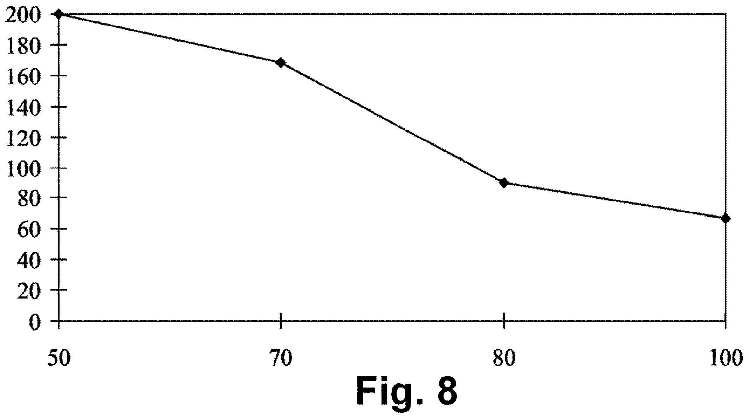

A furnace arrangement used in such an embodiment may resemble an arrangement used in Claus double combustion furnaces as well. For example, reference is made to Figure 8 in Schendel et al., referred to above. Such an arrangement may resemble a cylindrical vessel with calotte- or spherically shaped end caps, both end-caps defining a space for the first and second furnace zones, and the cylindrical part housing heat transfer equipment. An upper part of the vessel, whose axis of symmetry may essentially be arranged horizontally, may include the first terminal subsection and the first central subsection, and a lower part may include the first terminal subsection and the first central subsection, the "upper" and "lower" parts particularly being defined by a horizontal plane parallel to the axis of symmetry.

Again, using a furnace arrangement as described is particularly advantageous as it allows for using well-proven and tested equipment used in the industry for decades in connection with Claus desulphurization.

Tube bundles may particularly be provided in the first central subsection and the second central subsection to provide the first and second heat transfer arrangement, such as to provide a particularly effective means of heat transfer.

Partially repeating what was said above, in embodiments of the present invention the central section may axially be subdivided to form a third central subsection additionally to the first central subsection and the second central subsection, wherein the second central subsection is fluidly connected to the third central subsection via the second terminal subsection and wherein the third central subsection is used to provide the heat recovery arrangement.

According to embodiments of the present invention, the one or more first burners may include one or more shell-and-tube burners, as generally known for double combustion Claus furnaces described before.

In embodiments of the present invention, a temperature in at least a part of the second furnace zone may be provided to be above an auto-ignition temperature of hydrogen, e.g., above 600 °C, such as to allow a complete combustion of hydrogen using a simple oxygen introduction without the need for burners.

In embodiments of the present invention, the temperature suitable to thermally decompose ammonia may be a temperature in a range from 1.000 to 1.500 °C, particularly from 1.200 to 1.400 °C, further particularly from 1.250 to 1.350 °C, yet further particularly about 1.300 °C.

In embodiments of the present invention, an ammonia content is determined in a gas stream downstream of the first furnace zone and wherein the temperature may be adjusted on the basis thereof. This allows for reducing or eliminating ammonia emissions while keeping the method particularly efficient.

In embodiments of the present invention, the oxygen of the one or more second oxygen containing streams is supplied to the one or more second burners to provide a reducing stoichiometry in the one or more second furnace zones.

A level of oxygen enrichment above 21% by volume is or may be used in order to provide stable combustion and oxidation of the ammonia in the first reaction furnace, and to ensure sufficient temperature to crack or dissociate the ammonia to hydrogen according to embodiments of the present invention. High levels of ammonia oxidation and cracking in the first reaction furnace, to residual ppmv (parts per million by volume) levels ensures high levels of energy efficiency. Any hydrogen produced from cracking of the ammonia in the first reaction furnace can be oxidised in the second reaction furnace, to liberate further heat, and ensure complete combustion and energy release from the ammonia fuel. Given that the oxidation of ammonia accurs in the first reaction furnace under substoichiometric (or reducing) conditions nitrous oxides formation is avoided (see the results see the results discussed in connection with the Figures below). The second reaction furnace can be operated close to stoichiometric conditions, through management of the injection of air, enriched air or oxygen, either slightly reducing or with a marginal level of excess oxygen (typically 0 to 3% by volume excess oxygen), minimizing the formation of fuel nitrous oxides, given the fuel is primarily a hydrogen rich gas stream (generated from the first reaction furnace), and low ppmv or negligible levels of residual ammonia. Control of the excess oxygen is required to balance the potential formation of thermal nitrous oxides and the energy efficiency of the system. Marginally substocihiometric or reducing conditions will minimize thermal nitrous oxides formation, but are advantageously balanced against the energy efficiency, given incomplete combustion of the hydrogen. Excess oxygen conditions can provide the complete combustion of the hydrogen and highest energy efficiency, however, thermal nitrous oxides formation must be managed to meet with legislative emission limits, similarly as it may be the case in connection with the combustion of hydrocarbon fuels.

Ammonia injection via selective catalytic reduction or selective non-catalytic reduction downstream of the second furnace zone at the appropriate temperatures can provide a mechanism to reduce any thermal nitrous oxides formation generated under oxidising conditions in the second reaction furnace, if necessary.

In embodiments of the present invention, a flue gas may be withdrawn from the heat recovery arrangement, the flue gas being at least in part subjected to an analysis providing an indication corresponding to an ammonia and/or nitrous oxide content of the flue gas, such as to be able to immediately counteract an excessive ammonia and/or nitrous oxide content of the flue gas.

In embodiments of the present invention, ammonia or urea may be dosed into at least a section in a flue gas path of the flue gas adapted for selective catalytic or non-catalytic nitrous oxide reduction on the basis of the indication. This allows for further reducing nitrous oxide emissions. Reference is made to general flue gas treatment technology literature, such as for industrial plants and vehicles.

An apparatus for generating heat, with a furnace arrangement having a first furnace zone a first heat transfer arrangement arranged downstream of the first furnace zone, a second furnace zone arranged downstream of the first heat transfer arrangement, a second heat transfer arrangement arranged downstream of the second furnace zone, and a heat recovery arrangement arranged downstream of the second heat transfer arrangement is also part of the present invention.

The apparatus further comprises one or more burners configured to be supplied with ammonia in an ammonia feed amount using one or more ammonia streams, to be supplied with oxygen using one or more first oxygen containing streams, to combust a first part of the ammonia feed amount in the first furnace zone using the oxygen, to generate a temperature suitable to thermally decompose ammonia in the first furnace zone, and to thermally decompose a second part of the ammonia feed amount in the first furnace zone to form hydrogen and nitrogen, and wherein the apparatus further comprises one or more feed lances configured to be supplied with oxygen using one or more second oxygen containing streams.

The apparatus is configured to transfer heat, using the first heat transfer arrangement and/or the second heat transfer arrangement, to a heat transfer medium, and particularly to pre-heat the one or more first ammonia streams and/or the one or more first oxygen streams using the heat recovery arrangement.

For further features and advantages of such apparatus and embodiments thereof, reference is expressly made to the explanations above concerning the method proposed according to the present invention and its various embodiments, as these explanations apply equally here.

The same also applies to a plant which, according to embodiments of the present invention, may be configured to carry out a method according to any embodiment of the present invention described herein.

### Short description of the Figures

Embodiments of the invention will now be described, by way of example only, with reference to accompanying drawings, in which
Figure 1 illustrates a method according to an embodiment,
Figure 2 illustrates a furnace arrangement according to an embodiment, and
Figures 3 to 9 illustrate experimental data.

### Embodiments

In the Figures, elements of identical, essentially identical, functionally comparable, or technically compatible function and/or purpose may be identified with identical reference numerals, and repeated explanations may be omitted for reasons of conciseness. Explanations herein relating to devices, apparatus, arrangements, systems, etc., according to embodiments of the present invention likewise may apply to methods, processes, procedures, etc. according to embodiments of the present invention and vice versa.

The various embodiments described herein are presented only to assist in understanding and teaching the claimed features. These embodiments are provided as a representative sample of embodiments only, and are not exhaustive and/or exclusive. It is to be understood that advantages, embodiments, examples, functions, features, structures, and/or other aspects described herein are not to be considered limitations on the scope of the invention as defined by the claims or limitations on equivalents to the claims, and that other embodiments may be utilised and modifications may be made without departing from the scope of the claimed invention.

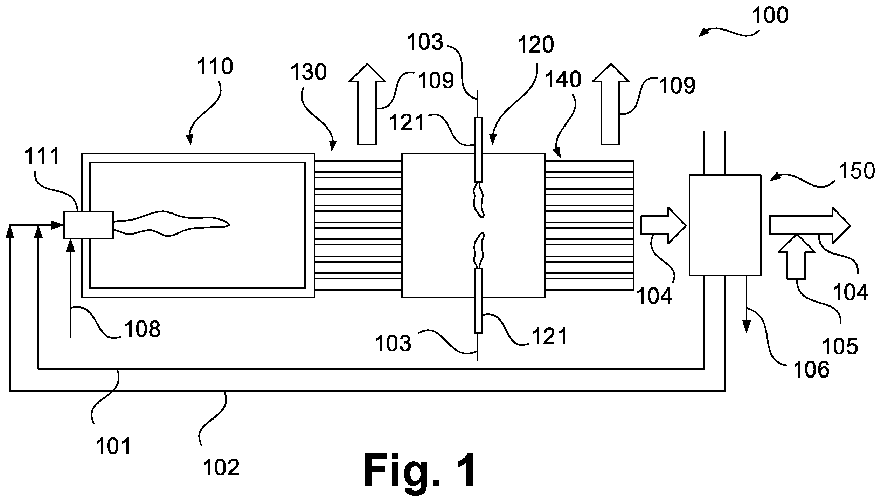

In Figure 1, a method according to an embodiment of the present invention is illustrated by referring to a strongly schematic view of a furnace arrangement 100.

The method illustrated in Figure 1 serves the purpose of generating or heating steam 109 as a heat transfer medium, as further explained below, but is not limited to this particular heat transfer medium. The furnace arrangement 100 comprises a first furnace zone 110 a first heat transfer arrangement 130 arranged downstream of the first furnace zone 110, a second furnace zone 120 arranged downstream of the first heat transfer arrangement 130, a second heat transfer arrangement 140 arranged downstream of the second furnace zone 120, and a heat recovery arrangement 150 arranged downstream of the second heat transfer arrangement 140.

Said elements are not necessarily arranged along a common axis, as illustrated in Figure 1, as long as the first heat transfer arrangement 130 is in fluid communication with the first furnace zone 110, the second furnace zone 120 is in fluid communication with the first heat transfer arrangement 130, the second heat transfer arrangement 140 is in fluid communication with the second furnace zone 120, and the heat recovery arrangement 150 is in fluid communication with the second heat transfer arrangement 140, "in fluid communication" particularly meaning that a flue gas or other gas mixture is able to pass to the zone or region mentioned first from the zone or region mentioned last in a corresponding pair.

In the example illustrated, a burner 111 is used to combust a first part of an ammonia feed amount provided by an ammonia stream 101 supplied to the burner 111 in the first furnace zone 110 using oxygen of a first oxygen containing streams 102 supplied to the burner 111 and generating a temperature suitable to thermally decompose ammonia, which is in the range mentioned above. A further oxygen containing stream, such as air, can be routed around an annulus of the burner, to provide an overall enriched oxygen stream in the first reaction furnace, improving the stability of the combustion, and providing a sufficient temperature to oxidize and fully crack the ammonia. Therefore, a second part of the ammonia feed amount is not combustionally oxidized but thermally decomposed in the first furnace zone 110 to form hydrogen and nitrogen. Heated or unheated air is indicated with 108.

Two oxygen (or enriched air or air) feed lances 121, 122 are, in the example illustrated, shown to provide oxygen (or enriched air or air) to the second furnace zone 120 using second oxygen containing streams 103 supplied to the feed lances 121, 122, for the purposes mentioned.

The product steam 109, which may be any of saturated steam, superheated steam, high pressure steam or super high pressure steam, or any combination thereof, is generated (from boiler feed water, for example) or heated using the first heat transfer arrangement 130 and/or the second heat transfer arrangement 140, and the one or more first ammonia streams 101 and/or the one or more first oxygen containing streams 102 and air (stream 108) are pre-heated using the heat recovery arrangement 140. A condensate, which may be essentially water, may form in the heat recovery arrangement 150 and may be withdrawn therefrom as a condensate stream 106.

A flue gas is indicated 104 and is passes through the heat recovery arrangement 140, from which is withdrawn, wherein the flue gas 104 may at least in part be subjected to an analysis providing an indication corresponding to an ammonia and/or nitrous oxide content of the flue gas 104. Ammonia or urea, as indicated 105, may be dosed into at least a section in a flue gas path of the flue gas 104 adapted for selective catalytic or non-catalytic nitrous oxide reduction on the basis of the indication.

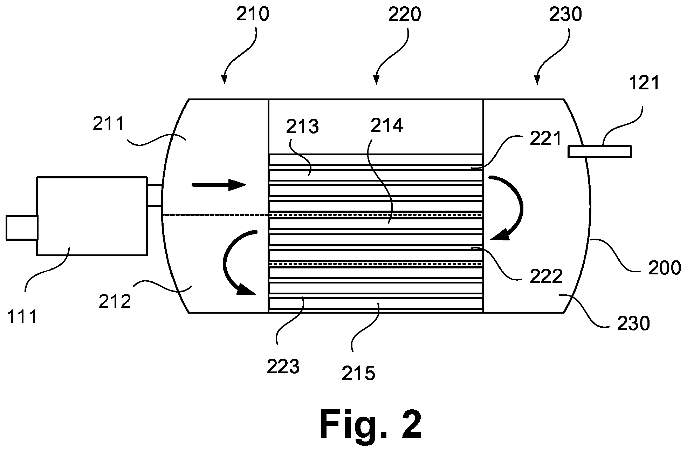

Figure 2 illustrates a furnace arrangement according to an embodiment of the present invention which may be used in the method illustrated in Figure 1.

As mentioned before, the first furnace zone 110, the second furnace zone 120, the first heat transfer arrangement 130, and the second heat transfer arrangement 140 may be arranged in a shell 200 comprising, along a common axis, a first terminal section 210, a central section 220 and a second terminal section 230, wherein the first terminal section 210 is axially subdivided to form a first terminal subsection 211 and a second terminal subsection 212, wherein the central section 220 is axially subdivided to form a first central subsection 221 and a second central subsection 222, wherein the first terminal subsection 211 is fluidly connected to the first central subsection 221, wherein the first central subsection 221 is fluidly connected to the second central subsection 222 via the second terminal section 230, wherein the first terminal subsection 211 is used to provide the first furnace zone 110, wherein the first central subsection 221 is used to provide the first heat transfer arrangement 130, wherein the second terminal section 230 is used to provide the second furnace zone 120, and the second central subsection is used to provide the second heat transfer arrangement 140.

Tube bundles 213, 214, which may be realized as generally known for dual combustion reactors, are provided in the first central subsection 221 and the second central subsection 222 to provide the first and second heat transfer arrangement 130, 140.

In the example illustrated in Figure 2, but not as a mandatory feature of the invention, the central section 220 may be axially subdivided to form a third central subsection 223 additionally to the first central subsection 221 and the second central subsection 222, wherein the second central subsection 222 is fluidly connected to the third central subsection 223 via the second terminal subsection 212 and wherein the third central subsection 223 is used to provide the heat recovery arrangement 150.

The method provided according to embodiments of the present invention was tested in a Claus burner test facility operated at 4 tons per day of sulphur production under Claus stoichiometry, corresponding to an energy of about 400 kWh. The facility could be operated with streams containing any combination of hydrogen sulphide, ammonia, carbon dioxide, water and hydrocarbons, particularly of the so-called BTX fraction (benzene, toluene and xylenes). The facility could be operated with air, enriched air (at any level) and 100% oxygen (including Post Combustion). Gas samples were extracted using a water-cooled sample probe at three locations down the length of the furnace and across the furnace. The gas samples were quenched within 3 to 5 ms to avoid reactions taking place during sampling. Thermocouples, infra-red and suction pyrometry were used to accurately measure temperatures.

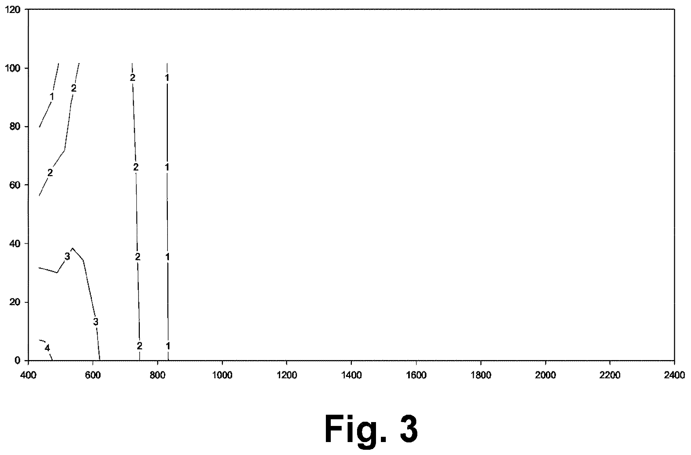

Figure 3 illustrates, in the form of a diagram, results obtained when operating the test facility with 28 vol.-% oxygen enrichment, i.e., ammonia, which was used as the only fuel gas here, was combusted with a stream of air enriched to 28 vol.-% oxygen with a set-up including a single combustion, i.e., a stoichiometric combustion without downstream oxygen addition.

A distance across the furnace in mm is indicated on the vertical axis while a distance down the furnace in mm is indicated on the horizontal axis. Isobaric lines labelled with 1 to 4 indicate levels of residual ammonia in % by volume in the first furnace zone.

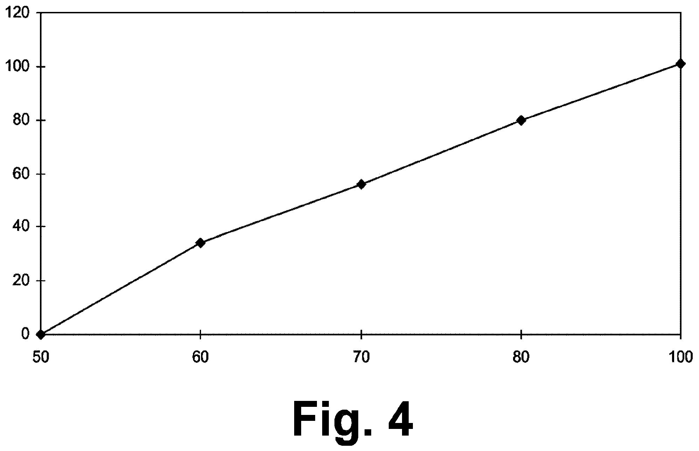

Figure 4 illustrates, in the form of diagram, results obtained when operating the test facility with 28 vol.-% oxygen enrichment wherein 100% of the stoichiometric oxygen was provided to the 1^{st} reaction furnace. Here, ammonia was used in a concentration indicated as vol.-% on the horizontal axis, the remainder being hydrogen sulphide. An ammonia content in a gas leaving the furnace in vol.-ppm is indicated on the vertical axis. The ammonia concentration opposite the burner was determined to be, in this set-up, 2 to 5 vol.-%. The exit concentration from the furnace ranges from 0 to 100 vol.-ppm ammonia depending on the ammonia content in the feed.

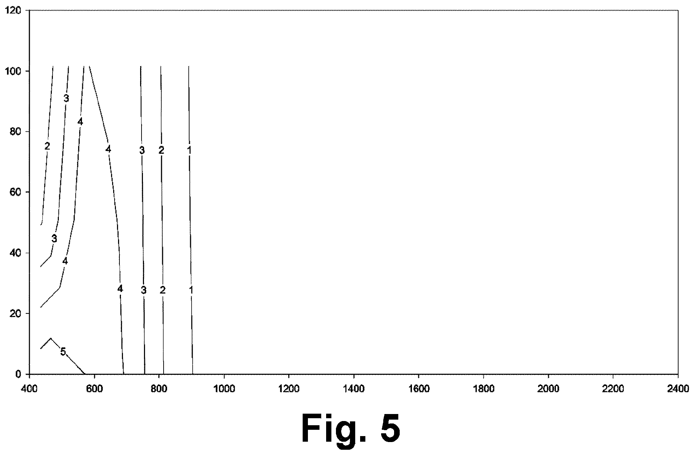

Figure 5 illustrates, in the form of a diagram, results obtained when operating the test facility with 28 vol.-% oxygen enrichment, i.e., ammonia, which was used as the only fuel gas here, was combusted with a stream of air enriched to 28 vol.-% oxygen, essentially as indicated before in connection with Figure 3. Again, a distance across the furnace in mm is indicated on the vertical axis while a distance down the furnace in mm is indicated on the horizontal axis. In contrast to Figure 3, a split flow or double combustion was performed here, where ammonia was combusted with 80% stoichiometry, i.e., less oxygen than required for complete combustion. Uncombusted ammonia was, due to the temperatures prevailing, decomposed to hydrogen and nitrogen and the hydrogen was auto-combusted downstream with a remainder of oxygen, as also the case according to embodiments of the invention. Isobaric lines labelled with 1 to 4 indicate levels of residual ammonia in % by volume in the first furnace zone.

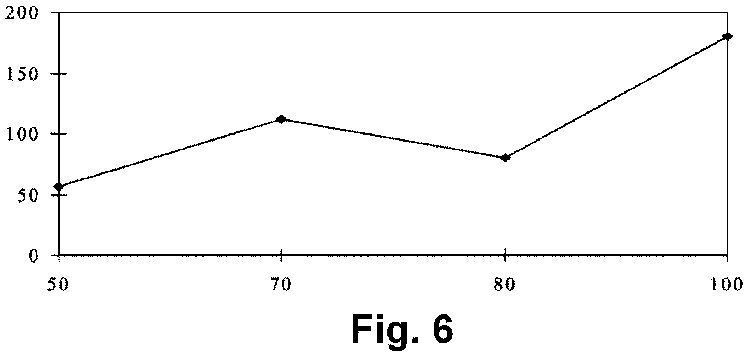

Figure 6 illustrates, in the form of diagram, and similarly to Figure 4, results obtained when operating the test facility with 28 vol.-% oxygen enrichment, but under the conditions just explained in connection with Figure 5, i.e., split-flow or double combustion. wherein only 80% of the stoichiometric oxygen was provided to the burner. Again, ammonia was used in a concentration indicated as vol.-% on the horizontal axis, the remainder being hydrogen sulphide. An ammonia content in a gas leaving the furnace in vol.-ppm is indicated on the vertical axis. Ammonia levels exceed 10 vol.-% opposite the burner in this set-up. The exit concentration from the furnace ranges from 50 to 180 vol.-ppm ammonia depending on the ammonia content in the feed.

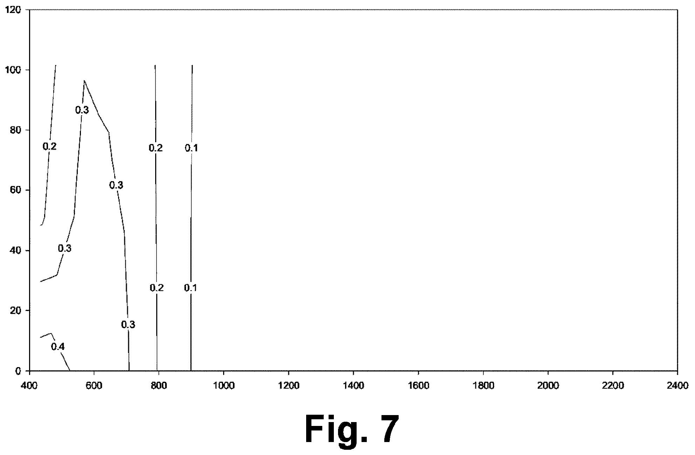

Figure 7 illustrates, in the form of a diagram, results obtained when operating the test facility with 45 vol.-% oxygen enrichment, i.e., ammonia, which was used as the only fuel gas here, was combusted with a stream of air enriched to 45 vol.-% oxygen, with a split-flow or double combustion as indicated before in connection with Figure 5, wherein only 50% of the stoichiometric oxygen was provided to the burner. Again, a distance across the furnace in mm is indicated on the vertical axis while a distance down the furnace in mm is indicated on the horizontal axis. Isobaric lines labelled with 0.1 to 0.4 indicate levels of residual ammonia in % by volume in the first reaction furnace.

Figure 8 illustrates, in the form of diagram, and similarly to Figure 6, results obtained when operating the test facility under the conditions just explained in connection with Figure 7, i.e., split-flow or double combustion, and 45 vol.-% oxygen enrichment. Again, ammonia was used in a concentration indicated as vol.-% on the horizontal axis, the remainder being hydrogen sulphide. An ammonia content in a gas leaving the furnace in vol.-ppm is indicated on the vertical axis. Herein, the ammonia content opposite the burner could be reduced to about 0.5 vol.-%. The exit concentration from the furnace ranges from 200 to 500 vol.-ppm depending on the ammonia content in the feed.

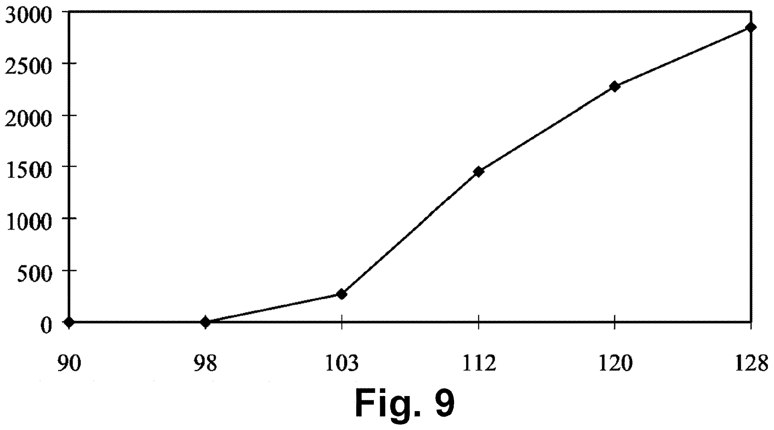

In Figure 9, nitrous oxides formation in dependency of the stoichiometry indicated on the horizontal axis in % is illustrated in the form or a diagram. The nitrous oxides concentration in vol.-ppm is indicated on the vertical axis. In all cases, 100% ammonia was used as a fuel gas. As could be seen, nitrous oxides formation was essentially zero until the stoichiometric oxygen demand exceeds 98%, when the level rapidly increases to several thousand ppm under oxidising conditions. Since 100% ammonia can be burnt successfully with 28% oxygen, it may allow a more flexible process option for treating ammonia streams. A temperature in excess of 1,300 °C (as measured using a ceramic thermocouple) may be required for complete ammonia destruction. There will be an economic balance for the quantity of oxygen used in the first reaction furnace, which will give a higher temperature and lower residual ammonia levels, which may lead to fuel nitrous oxides formation in the second reaction furnace (which can also be operated under reducing conditions to minimize, the overall efficiency and the possible need for selective catalytic reduction downstream)

As could be concluded from the experiments, 100% ammonia combustion with air is stable, providing a reaction furnace temperature sufficiently hot. An addition of small quantities of oxygen provides improved stability. Nitrous oxides formation can be avoided when operating under oxygen deficient conditions (i.e. less than 98% stoichiometric conditions). High levels of oxygen enrichment, such as 45%, may be necessary for very rich conditions (i.e., less than 50% stoichiometric conditions). High temperatures of more than 1,300 °C and a certain residence time may be required to avoid any residual ammonia. Given insufficient oxygen, without residual ammonia or formation of nitrous oxides, ammonia will be cracked into hydrogen and nitrogen. More than 50% of the ammonia may be cracked.

Therefore, double combustion technology, as used according to embodiments of the present invention, is suitable and particularly advantageous for generating heat, and therefore steam, from combusting ammonia.

## Claims

1. A method for providing heat using a furnace arrangement (100) comprising a first furnace zone (110) a first heat transfer arrangement (130) arranged downstream of the first furnace zone (110), a second furnace zone (120) arranged downstream of the first heat transfer arrangement (130), a second heat transfer arrangement (140) arranged downstream of the second furnace zone (120), and a heat recovery arrangement (150) arranged downstream of the second heat transfer arrangement (140), wherein one or more burners (111) are used to combust a first part of an ammonia feed amount provided by one or more ammonia streams (101) supplied to the one or more burners (111) in the first furnace zone (110) using oxygen of one or more first oxygen containing streams (102) supplied to the one or more burners (111) and generating a temperature suitable to thermally decompose ammonia, wherein a second part of the ammonia feed amount is thermally decomposed in the first furnace zone (110) to form hydrogen and nitrogen, wherein one or more feed lances (121, 122) are used to provide oxygen to the second furnace zone (120) using one or more second oxygen containing streams (103) supplied to the one or more feed lances (121, 122), wherein heat is transferred, using the first heat transfer arrangement (130) and/or the second heat transfer arrangement (140), to a heat transfer medium (109), such as steam for steam production or steam for power production with a steam turbine generator.

2. The method according to claim 1, wherein one or more first transfer line exchangers are used as, or as a part of, the first heat transfer arrangement (130) and wherein one or more second transfer line exchangers are used as, or as a part of, the second heat transfer arrangement (140).

3. The method according to claim 1, wherein the first furnace zone (110), the second furnace zone (120), the first heat transfer arrangement (130), and the second heat transfer arrangement (140) are arranged in a shell (200) comprising, along a common axis, a first terminal section (210), a central section (220) and a second terminal section (230), wherein the first terminal section (210) is axially subdivided to form a first terminal subsection (211) and a second terminal subsection (212), wherein the central section (220) is axially subdivided to form a first central subsection (221) and a second central subsection (222), wherein the first terminal subsection (211) is fluidly connected to the first central subsection (221), wherein the first central subsection (221) is fluidly connected to the second central subsection (222) via the second terminal section (230), wherein the first terminal subsection (211) is used to provide the first furnace zone (110), wherein the first central subsection (221) is used to provide the first heat transfer arrangement (130), wherein the second terminal section (230) is used to provide the second furnace zone (120), and the second central subsection is used to provide the second heat transfer arrangement (140).

4. The method according to claim 3, wherein tube bundles (213, 214) are provided in the first central subsection (221) and the second central subsection (222) to provide the first and second heat transfer arrangement (130, 140).

5. The method according to claim 3 or 4, wherein the central section (220) is axially subdivided to form a third central subsection (223) additionally to the first central subsection (221) and the second central subsection (222), wherein the second central subsection (222) is fluidly connected to the third central subsection (223) via the second terminal subsection (212) and wherein the third central subsection (223) is used to provide the heat recovery arrangement (150).

6. The method according to claim 1 or 2, wherein the one or more first burners (111) include one or more shell-and-tube burners.

7. The method according to any one of the preceding claims, wherein a temperature in at least a part of the second furnace zone (129) is provided to be above an auto-ignition temperature of hydrogen.

8. The method according to any one of the preceding claims, wherein the temperature suitable to thermally decompose ammonia is a temperature in a temperature range from 1.000 to 1.500 °C, particularly from 1.200 to 1.400 °C, further particularly from 1.250 to 1.350 °C, yet further particularly about 1.300 °C.

9. The method according to claim 3, wherein an ammonia content is determined in a gas stream downstream of the first furnace zone (110) and wherein the temperature is adjusted on the basis thereof.

10. The method according to any one of the preceding claims, wherein the oxygen of the one or more second oxygen containing streams (103) is supplied to the one or more second burners (111) to provide a reducing stoichiometry in the one or more second furnace zones (120).

11. The method according to any of the preceding claims, wherein a flue gas (104) is withdrawn from the heat recovery arrangement (140), the flue gas (104) being at least in part subjected to an analysis providing an indication corresponding to an ammonia and/or nitrous oxide content of the flue gas (104).

12. The method according to claim 5 wherein ammonia or urea is dosed into at least a section in a flue gas path of the flue gas (104) adapted for selective catalytic or non-catalytic nitrous oxide reduction on the basis of the indication.

13. Apparatus for providing heat, comprising a furnace arrangement (100) having a first furnace zone (110) a first heat transfer arrangement (130) arranged downstream of the first furnace zone (110), a second furnace zone (120) arranged downstream of the first heat transfer arrangement (130), a second heat transfer arrangement (140) arranged downstream of the second furnace zone (120), and a heat recovery arrangement (150) arranged downstream of the second heat transfer arrangement (140), wherein the apparatus further comprises one or more burners (111) configured to be supplied with ammonia in an ammonia feed amount using one or more ammonia streams (101), to be supplied with oxygen using one or more first oxygen containing streams (102), to combust a first part of the ammonia feed amount in the first furnace zone (110) using the oxygen, to generate a temperature suitable to thermally decompose ammonia in the first furnace zone (110), and to thermally decompose a second part of the ammonia feed amount in the first furnace zone (110) to form hydrogen and nitrogen, and wherein the apparatus further comprises one or more feed lances (121, 122) configured to be supplied with oxygen using one or more second oxygen containing streams (102), and wherein the apparatus is further configured to transfer heat, using the first heat transfer arrangement (130) and/or the second heat transfer arrangement (140), to a heat transfer medium (109).

## Patentansprüche

1. Verfahren zum Bereitstellen von Wärme unter Verwendung einer Ofenanordnung (100), umfassend eine erste Ofenzone (110), eine erste Wärmeübertragungsanordnung (130), die stromabwärts der ersten Ofenzone (110) angeordnet ist, eine zweite Ofenzone (120), die stromabwärts der ersten Wärmeübertragungsanordnung (130) angeordnet ist, eine zweite Wärmeübertragungsanordnung (140), die stromabwärts der zweiten Ofenzone (120) angeordnet ist, und eine Wärmerückgewinnungsanordnung (150), die stromabwärts der zweiten Wärmeübertragungsanordnung (140) angeordnet ist, wobei ein oder mehrere Brenner (111) verwendet werden, um einen ersten Teil einer Ammoniakzufuhrmenge, die durch einen oder mehrere Ammoniakströme (101) bereitgestellt wird, die dem einen oder den mehreren Brennern (111) in der ersten Ofenzone (110) zugeführt werden, unter Verwendung von Sauerstoff aus einem oder mehreren ersten sauerstoffhaltigen Strömen (102), die dem einen oder den mehreren Brennern (111) zugeführt werden, zu verbrennen und eine Temperatur zu erzeugen, die geeignet ist, um Ammoniak thermisch zu zersetzen, wobei ein zweiter Teil der Ammoniakzufuhrmenge in der ersten Ofenzone (110) thermisch zersetzt wird, um Wasserstoff und Stickstoff zu bilden, wobei eine oder mehrere Zufuhrlanzen (121, 122) verwendet werden, um der zweiten Ofenzone (120) Sauerstoff bereitzustellen, unter Verwendung eines oder mehrerer zweiter sauerstoffhaltiger Ströme (103), die der einen oder den mehreren Zufuhrlanzen (121, 122) zugeführt werden, wobei Wärme unter Verwendung der ersten Wärmeübertragungsanordnung (130) und/oder der zweiten Wärmeübertragungsanordnung (140) auf ein Wärmeübertragungsmedium (109), wie Dampf zur Dampferzeugung oder Dampf zur Stromerzeugung mit einem Dampfturbinengenerator, übertragen wird.

2. Verfahren nach Anspruch 1, wobei ein oder mehrere erste Transferleitungswärmetauscher als die erste Wärmeübertragungsanordnung (130) oder als ein Teil davon verwendet werden und wobei ein oder mehrere zweite Transferleitungswärmetauscher als die zweite Wärmeübertragungsanordnung (140) oder als ein Teil davon verwendet werden.

3. Verfahren nach Anspruch 1, wobei die erste Ofenzone (110), die zweite Ofenzone (120), die erste Wärmeübertragungsanordnung (130) und die zweite Wärmeübertragungsanordnung (140) in einem Mantel (200) angeordnet sind, der entlang einer gemeinsamen Achse einen ersten Endabschnitt (210), einen mittleren Abschnitt (220) und einen zweiten Endabschnitt (230) umfasst, wobei der erste Endabschnitt (210) axial unterteilt ist, um einen ersten Endteilabschnitt (211) und einen zweiten Endteilabschnitt (212) zu bilden, wobei der mittlere Abschnitt (220) axial unterteilt ist, um einen ersten mittleren Teilabschnitt (221) und einen zweiten mittleren Teilabschnitt (222) zu bilden, wobei der erste Endteilabschnitt (211) mit dem ersten mittleren Teilabschnitt (221) fluidisch verbunden ist, wobei der erste mittleren Teilabschnitt (221) mit dem zweiten mittleren Teilabschnitt (222) über den zweite Endabschnitt (230) fluidisch verbunden ist, wobei der erste Endteilabschnitt (211) verwendet wird, um die erste Ofenzone (110) bereitzustellen, wobei der erste mittlere Teilabschnitt (221) verwendet wird, um die erste Wärmeübertragungsanordnung (130) bereitzustellen, wobei der zweite Endabschnitt (230) verwendet wird, um die zweite Ofenzone (120) bereitzustellen, und der zweite mittlere Teilabschnitt verwendet wird, um die zweite Wärmeübertragungsanordnung (140) bereitzustellen.

4. Verfahren nach Anspruch 3, wobei Rohrbündel (213, 214) in dem ersten mittleren Teilabschnitt (221) und dem zweiten mittleren Teilabschnitt (222) vorgesehen sind, um die erste und zweite Wärmeübertragungsanordnung (130, 140) bereitzustellen.

5. Verfahren nach Anspruch 3 oder 4, wobei der mittlere Abschnitt (220) axial unterteilt ist, um zusätzlich zu dem ersten mittleren Teilabschnitt (221) und dem zweiten mittleren Teilabschnitt (222) einen dritten mittleren Teilabschnitt (223) zu bilden, wobei der zweite mittlere Teilabschnitt (222) über den zweiten Endteilabschnitt (212) mit dem dritten mittleren Teilabschnitt (223) fluidisch verbunden ist und wobei der dritte mittlere Teilabschnitt (223) verwendet wird, um die Wärmerückgewinnungsanordnung (150) bereitzustellen.

6. Verfahren nach Anspruch 1 oder 2, wobei der eine oder die mehreren ersten Brenner (111) einen oder mehrere Rohrbündelbrenner einschließen.

7. Verfahren nach einem der vorstehenden Ansprüche, wobei eine Temperatur in mindestens einem Teil der zweiten Ofenzone (129) so bereitgestellt wird, dass sie über einer Selbstentzündungstemperatur von Wasserstoff liegt.

8. Verfahren nach einem der vorstehenden Ansprüche, wobei die zum thermischen Zersetzen von Ammoniak geeignete Temperatur eine Temperatur in einem Temperaturbereich von 1.000 bis 1.500 °C, besonders von 1.200 bis 1.400 °C, weiter besonders von 1.250 bis 1.350 °C, noch weiter besonders etwa 1.300 °C ist.

9. Verfahren nach Anspruch 3, wobei ein Ammoniakgehalt in einem Gasstrom stromabwärts der ersten Ofenzone (110) bestimmt wird und wobei die Temperatur auf dieser Grundlage angepasst wird.

10. Verfahren nach einem der vorstehenden Ansprüche, wobei der Sauerstoff des einen oder der mehreren zweiten sauerstoffhaltigen Ströme (103) dem einen oder den mehreren zweiten Brennern (111) zugeführt wird, um eine reduzierende Stöchiometrie in der einen oder den mehreren zweiten Ofenzonen (120) bereitzustellen.

11. Verfahren nach einem der vorstehenden Ansprüche, wobei ein Rauchgas (104) aus der Wärmerückgewinnungsanordnung (140) abgezogen wird, wobei das Rauchgas (104) mindestens teilweise einer Analyse unterzogen wird, die eine Angabe liefert, die einem Ammoniak- und/oder Distickstoffmonoxidgehalt des Rauchgases (104) entspricht.

12. Verfahren nach Anspruch 5, wobei Ammoniak oder Harnstoff auf der Grundlage der Angabe in mindestens einen Abschnitt in einem Rauchgasweg des Rauchgases (104) dosiert wird, der für eine selektive katalytische oder nicht katalytische Stickoxidreduktion ausgelegt ist.

13. Einrichtung zum Bereitstellen von Wärme, umfassend eine Ofenanordnung (100), die eine erste Ofenzone (110), eine stromabwärts der ersten Ofenzone (110) angeordnete erste Wärmeübertragungsanordnung (130), eine stromabwärts der ersten Wärmeübertragungsanordnung (130) angeordnete zweite Ofenzone (120), eine stromabwärts der zweiten Ofenzone (120) angeordnete zweite Wärmeübertragungsanordnung (140) und eine stromabwärts der zweiten Wärmeübertragungsanordnung (140) angeordnete Wärmerückgewinnungsanordnung (150) aufweist, wobei die Einrichtung ferner einen oder mehrere Brenner (111) umfasst, die konfiguriert sind, um unter Verwendung eines oder mehrerer Ammoniakströme (101) mit Ammoniak in einer Ammoniakzufuhrmenge versorgt zu werden, unter Verwendung eines oder mehrerer erster sauerstoffhaltiger Ströme (102) mit Sauerstoff versorgt zu werden, einen ersten Teil der Ammoniakzufuhrmenge in der ersten Ofenzone (110) unter Verwendung des Sauerstoffs zu verbrennen, um eine Temperatur zu erzeugen, die geeignet ist, Ammoniak in der ersten Ofenzone (110) thermisch zu zersetzen, und einen zweiten Teil der Ammoniakzufuhrmenge in der ersten Ofenzone (110) thermisch zu zersetzen, um Wasserstoff und Stickstoff zu bilden, und wobei die Einrichtung ferner eine oder mehrere Zufuhrlanzen (121, 122) umfasst, die konfiguriert sind, um unter Verwendung eines oder mehrerer zweiter sauerstoffhaltiger Ströme (102) mit Sauerstoff versorgt zu werden, und wobei die Einrichtung ferner konfiguriert ist, um unter Verwendung der ersten Wärmeübertragungsanordnung (130) und/oder der zweiten Wärmeübertragungsanordnung (140) Wärme auf ein Wärmeübertragungsmedium (109) zu übertragen.

## Revendications

1. Procédé permettant de fournir de la chaleur à l'aide d'un agencement de four (100) comprenant une première zone de four (110), un premier agencement caloporteur (130) agencé en aval de la première zone de four (110), une seconde zone de four (120) agencée en aval du premier agencement caloporteur (130), un second agencement caloporteur (140) agencé en aval de la seconde zone de four (120), et un agencement de récupération de chaleur (150) agencé en aval du second agencement caloporteur (140), dans lequel un ou des brûleurs (111) sont utilisés pour brûler une première partie d'une quantité d'ammoniac fournie par un ou des courants d'ammoniac (101) alimentés au ou aux brûleurs (111) dans la première zone de four (110) à l'aide d'oxygène d'un ou des premiers courants contenant de l'oxygène (102) alimentés au ou aux brûleurs (111), et la génération d'une température appropriée pour décomposer thermiquement l'ammoniac, dans lequel une seconde partie de la quantité d'alimentation d'ammoniac est décomposée thermiquement dans la première zone de four (110) pour former de l'hydrogène et de l'azote, dans lequel une ou des lances d'alimentation (121, 122) sont utilisées pour fournir de l'oxygène à la seconde zone de four (120) à l'aide d'un ou des seconds courants contenant de l'oxygène (103) alimentés à la ou aux lances d'alimentation (121, 122), dans lequel la chaleur est transférée, à l'aide du premier agencement caloporteur (130) et/ou du second agencement caloporteur (140), à un fluide caloporteur (109), tel que de la vapeur pour la production de vapeur ou de la vapeur pour la production d'énergie avec un générateur à turbine à vapeur.

2. Procédé selon la revendication 1, dans lequel un ou des premiers échangeurs de ligne de transfert sont utilisés en tant que premier agencement de transfert (130) ou en tant que partie de celui-ci, et dans lequel un ou des seconds échangeurs de ligne de transfert sont utilisés en tant que ou en tant que partie du second agencement de transfert de chaleur (140).

3. Procédé selon la revendication 1, dans lequel la première zone de four (110), la seconde zone de four (120), le premier agencement caloporteur (130) et le second agencement caloporteur (140) sont agencés dans une coque (200) comprenant, le long d'un axe commun, une première section terminale (210), une section centrale (220) et une seconde section terminale (230), dans lequel la première section terminale (210) est subdivisée axialement pour former une première sous-section terminale (211) et une seconde sous-section terminale (212), dans lequel la section centrale (220) est subdivisée axialement pour former une première sous-section centrale (221) et une seconde sous-section centrale (222), dans lequel la première sous-section terminale (211) est fluidiquement reliée à la première sous-section centrale (221), dans lequel la première sous-section centrale (221) est reliée fluidiquement à la seconde sous-section centrale (222) par l'intermédiaire de la seconde section terminale (230), dans lequel la première sous-section terminale (211) est utilisée pour fournir la première zone de four (110),dans lequel la première sous-section centrale (221) est utilisée pour fournir le premier agencement caloporteur (130), dans lequel la seconde section terminale (230) est utilisée pour fournir la seconde zone de four (120), et la seconde sous-section centrale est utilisée pour fournir le second agencement caloporteur (140).

4. Procédé selon la revendication 3, dans lequel des faisceaux de tube (213, 214) sont prévus dans la première sous-section centrale (221) et la seconde sous-section centrale (222) pour fournir le premier et le second agencement caloporteur (130, 140).

5. Procédé selon la revendication 3 ou 4, dans lequel la section centrale (220) est subdivisée axialement pour former une troisième sous-section centrale (223) en plus de la première sous-section centrale (221) et de la deuxième sous-section centrale (222), dans lequel la deuxième sous-section centrale (222) est fluidiquement connectée à la troisième sous-section centrale (223) par l'intermédiaire de la deuxième sous-section terminale (212) et dans laquelle la troisième sous-section centrale (223) est utilisée pour fournir l'agencement de récupération de chaleur (150).

6. Procédé selon la revendication 1 ou 2, dans lequel le ou les premiers brûleurs (111) comportent un ou des brûleurs à calandre.

7. Procédé selon l'une quelconque des revendications précédentes, dans lequel une température dans au moins une partie de la seconde zone de four (129) est fournie pour être supérieure à une température d'autoinflammation de l'hydrogène.

8. Procédé selon l'une quelconque des revendications précédentes, dans lequel la température appropriée pour décomposer thermiquement l'ammoniac est une température dans une plage de température allant de 1 000 à 1 500 °C, en particulier de 1 200 à 1 400 °C, en outre particulièrement de 1 250 à 1 350 °C, mais en outre particulièrement d'environ 1 300 °C.

9. Procédé selon la revendication 3, dans lequel une teneur en ammoniac est déterminée dans un courant gazeux en aval de la première zone de four (110) et dans lequel la température est ajustée en fonction de celle-ci.

10. Procédé selon l'une quelconque des revendications précédentes, dans lequel l'oxygène du ou des seconds courants contenant de l'oxygène (103) est fourni au ou aux seconds brûleurs (111) pour fournir une stœchiométrie réductrice dans la ou les secondes zones de four (120).

11. Procédé selon l'une quelconque des revendications précédentes, dans lequel un gaz de combustion (104) est retiré de l'agencement de récupération de chaleur (140), le gaz de combustion (104) étant au moins en partie soumis à une analyse fournissant une indication correspondant à une teneur en ammoniac et/ou en protoxyde d'azote du gaz de combustion (104).

12. Procédé selon la revendication 5, dans lequel l'ammoniac ou l'urée est dosé(e) dans au moins une section dans un trajet de gaz de combustion du gaz de combustion (104) adapté à une réduction sélective catalytique ou non catalytique d'oxyde de diazote sur la base de l'indication.

13. Appareil permettant de fournir de la chaleur, comprenant un agencement de four (100) ayant une première zone de four (110), un premier agencement caloporteur (130) agencé en aval de la première zone de four (110), une seconde zone de four (120) agencée en aval du premier agencement caloporteur (130), un second agencement caloporteur (140) agencé en aval de la seconde zone de four (120), et un agencement de récupération de chaleur (150) agencé en aval du second agencement caloporteur (140), dans lequel l'appareil comprend en outre un ou des brûleurs (111) conçus pour être alimentés en ammoniac dans une quantité d'alimentation d'ammoniac à l'aide d'un ou plusieurs courants d'ammoniac (101), pour être alimentés en oxygène à l'aide d'un ou des premiers courants contenant de l'oxygène (102), la combustion d'une première partie de la quantité d'ammoniac dans la première zone de four (110) à l'aide de l'oxygène, pour générer une température adaptée à la décomposition thermique de l'ammoniac dans la première zone de four (110), et à la décomposition thermique d'une seconde partie de la quantité d'ammoniac dans la première zone de four (110) pour former de l'hydrogène et de l'azote, et dans lequel l'appareil comprend en outre une ou des lances d'alimentation (121, 122) conçues pour être alimentées en oxygène à l'aide d'un ou des seconds courants contenant de l'oxygène (102), et dans lequel l'appareil est en outre conçu pour transférer de la chaleur, à l'aide du premier agencement caloporteur (130) et/ou du second agencement caloporteur (140), à un fluide caloporteur (109).
